Europäisches Patentamt

European Patent Office

Office européen des brevets

(11) Veröffentlichungsnummer : **0 017 215 B1**

(12) **EUROPÄISCHE PATENTSCHRIFT**

(45) Veröffentlichungstag der Patentschrift :
11.05.83

(21) Anmeldenummer : 80101741.9

(22) Anmeldetag : 01.04.80

(51) Int. Cl.³ : **C 09 D  5/40, C 09 D  3/72, C 08 G  18/65, C 08 G  59/58, C 08 G  18/72, C 25 D  13/06**

(54) **Verfahren zur Herstellung kathodisch abscheidbarer Lackbindemittel, diese enthaltende Lacke und deren Verwendung.**

(30) Priorität : 09.04.79 AT 2606/79

(43) Veröffentlichungstag der Anmeldung :
15.10.80 Patentblatt 80/21

(45) Bekanntmachung des Hinweises auf die Patenterteilung : 11.05.83 Patentblatt 83/19

(84) Benannte Vertragsstaaten :
BE CH DE FR GB IT LI NL SE

(56) Entgegenhaltungen :
DE B 2 252 536
GB A 2 002 390

(73) Patentinhaber : Vianova Kunstharz Aktiengesellschaft
A-8402 Werndorf (AT)

(72) Erfinder : Schmölzer, Gerhard, Dr.
Elsteichgasse 37
A-8010 Graz (AT)
Erfinder : Daimer, Wolfgang, Dipl.-Ing.
Mariatrosterstrasse 12
A-8043 Graz (AT)
Erfinder : Verdino, Heiner, Dr.
Grillparzerstrasse 23
A-8010 Graz (AT)

(74) Vertreter : Blum, Rudolf Emil Ernst et al
c/o E. BLUM & CO. Vorderberg 11
CH-8044 Zürich (CH)

# Verfahren zur Herstellung kathodisch abscheidbarer Lackbindemittel, diese enthaltende Lacke und deren Verwendung

Die Erfindung betrifft ein Verfahren zur Herstellung von kathodisch abscheidbaren und durch Urethanbildung vernetzenden Lackbindemitteln auf der Basis von Aminaddukten epoxidgruppenhaltiger Polymerer.

Kathodisch abscheidbare Lackbindemittel auf Basis von Amin-Epoxid-Addukten sind aus der Literatur, z. B. aus den DE-OSen 24 15 100 oder 25 16 897 bekannt. Da derartige Umsetzungsprodukte für sich allein keine härtbaren Überzüge ergeben, ist eine Vielzahl von Härtungskomponenten vorgeschlagen worden, die entweder in Mischung oder in chemischer Bindung an das basische Epoxid-Amin-Addukt verwendet werden. Die praktische Überprüfung der verschiedenen Vorschläge hat jedoch gezeigt, daß im wesentlichen nur soch Härtungskomponenten technisch befriedigende Resultate zeigen, die blockierte Di- oder Polyisocyanatkomponenten enthalten. Soferne diese Vernetzungskomponente, wie z. B. in den US-PSen 4 031 050, 3 953 391, 3 984 299, oder der DE-OS 21 31 060 in Form vollständig blockierter Di- oder Polyisocyanate als wasserunlösliche Zumischkomponente vorliegt, besteht bei der Elektrotauchlackierung die bekannte Gefahr der Baddisproportionierung und ähnlicher Erscheinungen einer Trennung der Komponenten. Gemäß der US-PS 3 939 051 oder der DT-AS 22 52 536 kann dieser Nachteil vermieden werden, wenn man partiell blokkierte Di- oder Polyisocyanate, welche noch eine freie NCO-Gruppe aufweisen, mit isocyanatreaktiven Gruppen des Polymeren zur Reaktion bringt.

Der Nachteil dieser Methode liegt in der wesentlich eingeschränkten Auswahl der zur Verwendung gelangenden Isocyanate. Zur Gewährleistung einer einwandfreien Reaktionsführung können nur Diisocyanate, deren Isocyanatgruppen deutlich unterschiedliche Reaktivität aufweisen, eingesetzt werden. Anderenfalls ist eine Herstellung von Polyisocyanaten mit einer freien NCO-Gruppe unter den üblichen Bedingungen praktisch nicht möglich. Man erhält in diesem Fall Gemische von vollständig blokkierten Polyisocyanaten, deren Nachteile bereits oben beschrieben wurden, und Verbindungen, welche mehr als eine NCO-Gruppe pro Molekül aufweisen, was bei der Reaktion mit dem Polymeren zu unkontrollierbaren Molekülverknüpfungen und damit zu Viskositätssteigerungen oder zu Gelierung führt.

In der Praxis ist diese Methode daher auf eine bestimmte Gruppe von Diisocyanaten beschränkt. Da bei diesen halbblockierten Diisocyanaten somit nur eine NCO-Gruppe zur Vernetzung bleibt, zeigen die Lacke auf dieser Basis in vielen Fällen eine nicht ausreichende Vernetzungsdichte, welche sich in mangelhaften Beständigkeitseigenschaften in bezug auf Lösungsmittel- und Korrosionsfestigkeit äußert.

Aus der DE-OS 27 08 611 bzw. den JAPAN Kokai 75/139 827 und 75/139 829 sind carboxyl-gruppentragende Polyurethan-Präpolymere bekannt, welche durch Umsetzung eines Di- oder Polyisocyanats mit einer Oxycarbonsäure und Blockierung der freibleibenden NCO-Gruppen erhalten werden. Gemäß der genannten Literaturstellen können diese Verbindungen durch Neutralisation der Carboxylgruppen mit Basen in eine wasserlösliche oder wasserdispergierbare Form übergeführt werden und damit als Härtungskomponente in anionischen Wasserlacken dienen.

Es wurde nun gefunden, daß nach diesem Prinzip aufgebaute Polyisocyanataddukte zur Herstellung von kathodisch abscheidbaren Lackbindemitteln herangezogen werden können, welche die Nachteile der Produkte des Standes der Technik nicht aufweisen. Dabei werden solche carboxylgruppentragenden Polyisocyanataddukte über ihre Carboxylgruppe durch Reaktion mit den Epoxidgruppen in ein Epoxidgruppen und gegebenenfalls bereits basische Stickstoffgruppierungen aufweisendes Polymeres eingeführt. Es war dabei überraschend und nicht vorherzusehen, daß bei den notwendigen Reaktionstemperaturen praktisch keine merkbare Freisetzung der blockierten Isocyanatgruppen erfolgt und damit auch keine unerwünschten Nebenreaktionen auftreten.

Die vorliegende Erfindung betrifft daher ein Verfahren zur Herstellung von nach Neutralisation mit organischen oder anorganischen Säuren wasserlöslichen, insbesonders für die kathodische Abscheidung nach dem ETL-Verfahren geeigneten Lackbindemitteln auf der Basis von bei erhöhter Temperatur durch Polyurethanbildung vernetzenden Epoxid-Amin-Addukten, welches dadurch gekennzeichnet ist, daß man 3-70 Mol-%, vorzugsweise 5-40 Mol-% der Epoxidgruppen eines Polymeren mit einem Epoxidäquivalentgewicht zwischen 180 und 1 500 bei 80-160 °C mit einem Polyisocyanataddukt, welches praktisch keine freien NCO-Gruppen und pro Molekül mindestens 1, vorzugsweise 1 bis 2 freie Carboxylgruppen aufweist und mindestens 50 % der nicht mit dem Polyisocyanataddukt zur Umsetzung gelangenden Epoxidgruppen vor oder nach der Reaktion mit dem Polyisocyanataddukt in bekannter Weise bei 20 bis 150 °C mit sekundären (cyclo)aliphatischen Aminen und/oder Alkanolaminen umsetzt, wobei das Endprodukt eine Säurezahl von höchstens 5 mg KOH/g und eine Aminzahl von 24 bis 150 mg KOH/g aufweist.

Überdies betrifft die Erfindung wasserverdünnbare Überzugsmittel auf der Basis der so hergestellten Lackbindemittel. Gemäß Anspruch 5.

Die erfindungsgemäß hergestellten Lackbindemittel weisen ausgezeichnete Beständigkeitseigenschaften gegenüber Lösungsmittel und Korrosionsangriffen auf. Das erfindungsgemäße Verfahren gewährleistet durch die Reaktion zwischen den epoxidgruppenhaltigen harzartigen Polymeren und den carboxylgruppenhaltigen Polyisocyanataddukten eine einheitliche Zusammensetzung und Abscheidung der auf diese Weise hergestellten Lackbindemittel.

Geeignete epoxidgruppenhaltige Polymere, im folgenden kurz Epoxidharze genannt, besitzen im Molekül durchschnittlich zwei oder mehr Epoxidgruppen, von denen diejenigen mit endständiger Position eine bevorzugte Reaktionsfähigkeit aufweisen. Dennoch ist das Verfahren auch für Epoxidharze mit nicht endständigen Epoxidgruppen anwendbar, sofern geeignete Reaktionsbedingungen gewählt werden. Die Epoxidharze weisen ein Epoxidäquivalent zwischen 180 und 1 500 auf. Bevorzugte Epoxidharze sind Bisphenolpolyglycidyläther, Novolakpolyglycidyläther, Polyglycidyläther aliphatischer Di- und Polyalkohole sowie epoxidierte Polybutadiene. Letztere werden insbesonders zur Flexibilisierung der Überzüge in Kombination mit den vorstehend genannten Epoxidharzen mitverwendet.

Die zur Reaktion mit den epoxidgruppenhaltigen Polymeren herangezogenen Polyisocyanat-Additionsprodukte werden allgemein durch Umsetzung von Hydroxycarbonsäuren, wie Dimethylolpropionsäure, Weinsäure, Glykolsäure, Salicylsäure, Bis-(hydroxyphenyl)alkansäuren etc. mit Di- oder Polyisocyanaten und Blockierung der freien NCO-Gruppen mit üblichen Verkappungsmitteln hergestellt. Für die vorliegende Erfindung werden vorzugsweise solche eingesetzt, die sich aus Dihydroxycarbonsäuren, Diisocyanaten und monofunktionellen Verkappungsmitteln im Molverhältnis von ca. 1 : 2 : 2 aufbauen und ein Durchschnittsmolekulargewicht von weniger als 2 000 besitzen. Bevorzugte Dihydroxycarbonsäuren sind Dimethylolpropionsäure, Weinsäure, Bis-(4-hydroxyphenyl)-essigsäure, gegebenenfalls unter anteiliger Mitverwendung von Salicylsäure.

Unter den Diisocyanaten werden bevorzugt 2,4- bzw. 2,6-Toluylendiisocyanat, Methylen-bis-(cyclohexyl)diisocyanat, Diphenylmethandiisocyanat, Isophorondiisocyanat, Trimethylhexamethylendiisocyanat, Hexamethylendiisocyanat und 1,3-bis-(4'-methyl-3'-isocyanatophenyl)-uretdion verwendet. Anteilsmäßig können auch Polyisocyanate wie z. B. Triphenylmethantriisocyanat, Polymethylenpolyphenylisocyanat oder Trimerisierungsprodukte von Diisocyanaten wie z. B. das Triisocyanatoisocyanurat des Isophorondiisocyanats verwendet werden. Als Verkappungsmittel dienen Verbindungen mit einem aktiven Wasserstoffatom wie z. B. Alkohole, Monoäther des Äthylenglykols, Ketoxime, ε-Caprolactam, Pyrrolidon, Piperidon-2, Acetessigester, Malonester, Acetylaceton, Hydroxamsäuren, Phthalimid, Imidazol etc.

Die Umsetzung zwischen Hydroxycarbonsäuren, Diisocyanaten und Verkappungsmitteln kann in einer oder vorzugsweise in zwei Reaktionsstufen durchgeführt werden. Die Anwesenheit von inerten Lösungsmitteln wie Ketonen, Dimethylformamid, Estern usw. ist im allgemeinen erwünscht. Die Umsetzung wird bis zu einem möglichst niedrigen Gehalt von freien NCO-Gruppen, möglichst unter 1 % geführt, um die Lagerfähigkeit dieser Zwischenprodukte nicht zu beeinträchtigen. Die carboxylgruppenhaltigen Polyisocyanataddukte haben Säurezahlen von 10-150 mg KOH/g und einen Gehalt an verkappten NCO-Gruppen von 2-34 %, jeweils bezogen auf nichtflüchtige Substanz.

Die Umsetzung zwischen Epoxidharz und carboxylfunktionellem Polyisocyanataddukt kann vor oder nach der Umsetzung der Epoxidgruppen mit dem Amin bzw. Alkanolamin erfolgen. Diese Reaktion wird bei 80-160 °C ausgeführt, die Gegenwart von alkalischen Katalysatoren wie z. B. Natriumcarbonat, tertiären oder quaternären Aminen ist bevorzugt. Überdies können Lösungsmittel vorteilhafterweise zugegen sein.

Die Mengenverhältnisse werden so gewählt, daß pro Mol eingesetzte Epoxidgruppe 3 bis 70, vorzugsweise 5 bis 40 Mol-% Carboxylgruppen des Polyisocyanataddukts angewendet werden. Die Reaktion wird bis zum praktisch vollständigen Umsatz der Carboxylgruppen ausgeführt, d. h. bis die Säurezahl des Reaktionsproduktes einen Wert von weniger als 5 mg KOH/g erreicht hat.

Zur Einführung der basischen Gruppen werden mindestens 50 % der durch die Reaktion mit dem Polyisocyanataddukt nicht verbrauchten Epoxidgruppen mit sekundären (cyclo)-aliphatischen Aminen und/oder Alkanolaminen reagiert. Beispielhaft sind zu nennen Diäthylamin, Dipropylamin, Dibutylamin bzw. deren Isomere und Homologe, Diäthanolamin, Diisopropanolamin, N-Methyläthanolamin bzw. deren Isomere und Homologe. Polyamine, die neben sekundären auch primäre Aminfunktionen enthalten, können ebenfalls verwendet werden. In diesem Fall müssen die primären Aminogruppen durch Reaktion mit Ketonen unter Abtrennung des gebildeten Wassers vorübergehend als Ketimine maskiert werden, um eine Polyreaktion mit den Epoxidharzen mit der Gefahr vorzeitiger Vernetzung zu vermeiden.

Die Reaktion zwischen Epoxidharz und Aminverbindung kann vor, bevorzugt aber nach der Umsetzung des Epoxidharzes mit dem carboxylgruppenhaltigen Polyisocyanataddukt bei Temperaturen von 20-150 °C durchgeführt werden. Die Gegenwart von Lösungsmitteln während der Umsetzung ist im allgemeinen bevorzugt. Die Mengenverhältnisse der Reaktionspartner werden so gewählt, daß das gesamte Amin sicher an das Epoxidharz gebunden ist und ein geringer Überschuß an Epoxidgruppen — im allgemeinen höchstens 50 % der nicht mit Carboxylgruppen reagierten Gruppen — übrig bleibt.

Die erfindungsgemäß hergestellten Bindemittel können mit weiteren Lösungsmitteln auf eine gewünschte Konzentration verdünnt werden. Sie sind nach wenigstens teilweiser Neutralisation ihrer basischen Gruppen durch organische oder anorganische Säuren wie Ameisensäure, Essigsäure, Propionsäure, Milchsäure oder Phosphorsäure mit Wasser klar bis opaleszent verdünnbar. Die wäßrigen Lösungen mit 10-20 % Harzgehalt zeigen bei mehrwöchiger Lagerung keine Ausfällungen oder andere nachteilige Veränderungen.

Zur Herstellung von Lacken auf der Basis der erfindungsgemäß hergestellten Bindemittel werden diese in bekannter Weise mit geeigneten Pigmenten vermahlen und mit den Hilfsmitteln und Zusatzstoffen, wie sie in der Lackherstellung üblich sind, versetzt. Die Lacke werden nach Neutralisation mit der Säure mit Wasser auf den gewünschten Festkörpergehalt verdünnt. Die Applikation kann durch Tauchen, Fluten, Spritzen und ähnlichen Verfahren erfolgen. Bevorzugt werden sie nach dem ETL-Verfahren aufgebracht, wobei aufgrund des kationischen Charakters der Bindemittel die Abscheidung an der Kathode erfolgt. Die Härtung der aufgebrachten Überzüge erfolgt üblicherweise bei 150 bis 200 °C, wobei die Härtungszeiten zwischen 5 und 30 Minuten liegen. Bei Bindemitteln, welche gemäß der vorliegenden Erfindung unter Verwendung von Phenolcarbonsäuren als Verkappungsmittel hergestellt wurden, läßt sich der Vorteil der tieferen Entkappungstemperatur von Phenolen technisch ausnützen, da das phenolische Verkappungsmittel über die Carboxylgruppe in Form einer Esterbindung an das Bindemittelpolymere geknüpft bleibt und nicht als flüchtiges Spaltprodukt in den Abluftanlagen zu Umweltbelästigungen führt.

Die folgenden Beispiele sollen die Erfindung erläutern, ohne sie in ihrem Umfang zu beschränken. Alle Prozentangaben beziehen sich, soweit nicht anders angegeben, auf Gewichsprozente.

### Herstellung der in den Beispielen eingesetzten Vorprodukte

#### Polyisocyanataddukt (A)

In einem Reaktionskolben mit Rührung, Rückflußkühlung, Inertgaszufuhr und Thermometer werden 244 g Bis(4-hydroxyphenyl)-essigsäure (1 Mol) in 150 g Methyläthylketon gelöst. Nach Zugabe von 1 g Dibutylzinndilaurat fügt man bei 60 °C 348 g Toluylendiisocyanat (80 % 2,4-Isomeres, 20 % 2,6-Isomeres) in einem Zuge zu und hält weiter bei 60 °C bis der Gehalt an freien NCO-Gruppen auf 11-12 % des Reaktionsansatzes gesunken ist. Man setzt 240 g Äthylenglykolmonoäthyläther langsam zu und kontrolliert den exothermen Temperaturanstieg bis 80 °C. Nach einer Stunde Reaktionszeit liegt der Gehalt an freien NCO-Gruppen unter 0,5 %. Das Harz hat einen Festgehalt von 83 % und eine Säurezahl von 61 mg KOH/g.

#### Polyisocyanataddukt (B)

In einem gleichartigen Reaktionsgefäß wie bei (A) beschrieben, werden 215 g ε-Caprolactam bei 70 °C aufgeschmolzen. Es werden 1 g Dibutylzinndilaurat und anschließend bei 60 °C in einem Zuge 317 g Hexamethylendiisocyanat zugegeben. Man hält 60 °C bis nach 2 bis 3 Stunden der Gehalt an freien Isocyanatgruppen auf 13,5 % gefallen ist. Daraufhin wird eine Lösung von 150 g Weinsäure in 171 g N,N-Dimethylformamid zugegeben und eine weitere Stunde bei 60 °C gehalten, bis der Gehalt an freien Isocyanatgruppen auf Null gefallen ist. Der Festkörpergehalt des Produktes beträgt 80 %, die Säurezahl ist 155 mg KOH/g bezogen auf Festharz.

#### Polyisocyanataddukt (C)

In einem gleichartigen Reaktionsgefäß wie bei (A) beschrieben werden 134 g Dimethylolpropionsäure in 226 g ε-Caprolactam bei 110 °C aufgeschmolzen. Bei 60 °C werden nacheinander 1 g Dibutylzinndilaurat und 444 g Isophorondiisocyanat zugegeben. Die Temperatur steigt exotherm auf 120 °C un wird gehalten, bis der Gehalt an freien Isocyanatgruppen unter 0,5 % gefallen ist. Das Produkt hat einen Erweichungspunkt von 86 °C und eine Säurezahl von 65 mg KOH/g.

#### Beispiel 1

475 g Bisphenoldiglycidyläther, enthaltend 1 Mol Epoxidgruppen werden in 132 g Butanol-2 unter Erwärmen gelöst. Man setzt 0,5 g Triäthylamin als Katalysator zu und anschließend 275 g des Polyisocyanataddukets A (enthaltend 0,25 Mol Carboxylgruppen). Man hält bei 125 °C bis nach ca. 2 Stunden die Säurezahl auf 2,4 mg KOH/g gefallen ist. Nach Zugabe von 190 g Äthylenglykolmonoäthyläther werden bei 80 °C portionsweise 49 g N-Methyläthanolamin (0,65 Mol) zugesetzt. Man erwärmt zur Vervollständigung der Reaktion 3 Stunden auf 130 °C. Das Bindemittel ist nach Neutralisation mit Essigsäure unbegrenzt in Wasser löslich.

#### Beispiel 2

190 g eines Bisphenoldiglycidyläthers, enthaltend 1 Mol Epoxidgruppen werden in 116 g Butanol-2 gelöst und mit einer Mischung aus 26 g Diäthanolamin und 18 g Diäthylamin zur Reaktion gebracht, bis in einem Auszug mit gesättigter NaCl-Lösung keine freien Basen mehr nachweisbar sind. Anschließend werden 85 g des Polyisocyanataddukets B zugegeben und der Reaktionsansatz auf 120 °C erwärmt. Nach einer Stunde Reaktionszeit ist die Säurezahl auf 1,5 abgesunken. Der Festgehalt des Harzes beträgt 68 %, die Aminzahl ist 92 mg KOH/g.

#### Beispiel 3

175 g eines Novolakpolyglycidyläthers, enthaltend 1 Mol Epoxidgruppen werden mit 59 g Butanol-2 verdünnt und mit 161 g Polyisocyanataddukt C und 0,5 g Triäthylamin auf 115 °C erwärmt. Nach 1 bis 2 Stunden Reaktionszeit wird eine Säurezahl von weniger als 2 mg KOH/g gefunden. Man kühlt auf 100 °C, verdünnt mit 117 g Äthylenglykolmonoäthyläther und setzt bei 100 °C mit 74 g Diäthanolamin um, bis der Gehalt an ungebundenem Amin unter 1 % beträgt. Der Festgehalt des Harzes beträgt 69 %, die Aminzahl ist 90 mg KOH/g.

**Ansprüche**

1. Verfahren zur Herstellung von nach Neutralisation mit organischen oder anorganischen Säuren wasserlöslichen Lackbindemitteln auf der Basis von bei erhöhter Temperatur durch Polyurethanbildung vernetzenden Epoxid-Amin-Addukten, dadurch gekennzeichnet, daß man 3 bis 70 Mol-%, vorzugsweise 5 bis 40 Mol-% der Epoxidgruppen eines Polymeren mit einem Epoxidäquivalent zwischen 180 und 1 500 bei 80 bis 160 °C mit einem Polyisocyanataddukt, welches praktisch keine freien NCO-Gruppen und pro Molekül mindestens 1, vorzugsweise 1 bis 2 freie Carboxylgruppen aufweist, und mindestens 50 % der nicht mit dem Polyisocyanataddukt zur Umsetzung gelangenden Epoxidgruppen vor oder nach der Reaktion mit dem Polyisocyanataddukt in bekannter Weise bei 20 bis 150 °C mit sekundären (cyclo)aliphatischen Aminen und/oder Alkanolaminen umsetzt, wobei das Endprodukt eine Säurezahl von höchstens 5 mg KOH/g und eine Aminzahl von 24 bis 150 mg KOH/g aufweist.

2. Verfahren nach Anspruch 1, dadurch gekennzeichnet, daß man als Epoxidgruppen tragendes Polymeres anteilig neben Di- oder Polyglycidyläthern von Phenolen und/oder Di- oder Polyalkoholen epoxidierte Polybutadiene einsetzt.

3. Verfahren nach den Ansprüchen 1 und 2, dadurch gekennzeichnet, daß man Polyisocyanataddukte aus Dihydroxycarbonsäuren, Diisocyanaten und monofunktionellen Verkappungsmitteln einsetzt, wobei das Molverhältnis zwischen diesen Komponenten 1 : 2 : 2 und das Durchschnittsmolekulargewicht weniger als 2 000 beträgt.

4. Verfahren nach den Ansprüchen 1 bis 3, dadurch gekennzeichnet, daß man die Reaktion zwischen den Epoxidgruppen des Polymeren und den Carboxylgruppen des Polyisocyanatadduktes in Gegenwart alkalischer Katalysatoren und gegebenenfalls in Gegenwart von Lösungsmitteln durchführt.

5. Lacke auf der Basis von bei erhöhter Temperatur durch Polyurethanbildung vernetzenden Epoxid-Amin-Addukten, dadurch gekennzeichnet, daß sie als Bindemittel ein Umsetzungsprodukt aus einem Epoxidgruppen tragenden Polymeren mit einem Epoxidäquivalentgewicht zwischen 180 und 1 500, dessen Epoxidgruppen zu 3 bis 70 Mol-%, vorzugsweise 5 bis 40 Mol-% mit einem Polyisocyanataddukt, welches keine freien NCO-Gruppen und pro Mol mindestens 1, vorzugsweise 1 bis 2 Carboxylgruppen trägt, umgesetzt sind und einem sekundären (cyclo)aliphatischen Amin und/oder Alkanolamin enthalten, wobei das Bindemittel eine Säurezahl von höchstens 5 mg KOH/g und eine Aminzahl von 24 bis 150 mg KOH/g aufweist.

6. Verwendung der Lacke nach Anspruch 5 für das kathodische Elektrotauchlackierverfahren.

**Claims**

1. Process for producing paint binders water soluble upon neutralisation with organic or inorganic acids on the basis of epoxide-amine adducts crosslinking through polyurethane formation at elevated temperature, characterised in that 3 to 70 mol-%, preferably 5 to 40 mol-% of the epoxy groups of a polymer with an epoxy equivalent of 180 to 1 500 are reacted at 80 to 160 °C with a polyisocyanate adduct having practically no free NCO-groups and containing in the molecule at least 1, preferably 1 to 2 free carboxyl groups, and at least 50 % of the epoxy groups not being reacted with the polyisocyanate, are reacted in known manner at 20 to 150 °C with secondary (cyclo)aliphatic amines and/or alkanolamines, prior or after reaction with the polyisocyanate adduct, the end product having an acid value of 5 mg KOH/g max. and an amine number of 24 to 150 mg KOH/g.

2. Process according to claim 1, characterised in that as the epoxy group containing polymer, besides di- or polyglycidylethers of phenols and/or di- or polyalcohols, epoxidised polybutadienes are used.

3. Process according to claims 1 and 2, characterised in that polyisocyanate adducts of dihydroxy carboxylic acids, diisocyanates and monofunctional masking agents are used, the mole ratio between the components being 1 : 2 : 2 and the average molecular weight being less than 2 000.

4. Process according to claims 1 to 3, characterised in that the reaction between the epoxy groups of the polymers and the carboxy groups of the polyisocyanate adduct is carried out in the presence of alkaline catalysts and optionally in the presence of solvents.

5. Paints on the basis of epoxy-amine adducts crosslinking at elevated temperature by polyurethane formation, characterised in that they contain as binder a reaction product of a polymer carrying epoxy groups with an epoxy equivalent between 180 and 1 500, 3 to 70 mol-%, preferably 5 to 40 mol-% of the epoxy groups of which being reacted with a polyisocyanate adduct carrying no free NCO-groups and, per molecule at least 1, preferably 1 to 2, carboxy groups, and with a secondary (cyclo)aliphatic amine and/or alkanolamine, the binder having an acid value of 5 mg KOH/g max. and an amine value of 24 to 150 mg KOH/g.

6. Use of the paints according to claim 5 for cathodic electro-deposition.

## Revendications

1. Procédé de préparation de liants pour peintures, solubles dans l'eau après neutralisation par des acides organiques ou minéraux, à base d'adducts époxyde-amine réticulant à température élevée par formation de polyuréthannes, caractérisé en ce que l'on fait réagir de 3 à 70 moles %, de préférence de 5 à 40 moles %, des groupes époxydes d'un polymère présentant un équivalent d'époxyde de 180 à 1 500 à une température de 80 à 160 °C avec un adduct de polyisocyanate qui ne contient pratiquement pas de groupes NCO libres et contient par molécule au moins un, de préférence un à deux groupes carboxyles libres, et au moins 50 % des groupes époxydes qui ne participent pas à la réaction avec l'adduct de polyisocyanate, avant ou après la réaction avec l'adduct de polyisocyanate, de manière connue en soi, à une température de 20 à 150 °C, avec des amines et/ou alcanolamines (cyclo)aliphatiques secondaires, le produit final présentant un indice d'acide qui est au maximum de 5 mg de KOH/g et un indice d'amine de 24 à 150 mg de KOH/g.

2. Procédé selon la revendication 1, caractérisé en ce que l'on met en œuvre en tant que polymères portant des groupes époxydes, en partie, avec des éthers di- ou poly-glycidyliques de phénols et/ou de di- ou poly-alcools, des polybutadiènes époxydés.

3. Procédé selon les revendications 1 et 2, caractérisé en ce que l'on met en œuvre des adducts de polyisocyanates dérivant d'acides dihydroxycarboxyliques, de diisocyanates et d'agents bloquants mono-fonctionnels, les proportions molaires entre ces composants étant de 1 : 2 : 2 et le poids moléculaire moyen inférieur à 2 000.

4. Procédé selon les revendications 1 à 3, caractérisé en ce que la réaction entre les groupes époxydes du polymère et les groupes carboxyles de l'adduct de polyisocyanate est effectuée en présence de catalyseurs alcalins et le cas échéant en présence de solvants.

5. Peintures à base d'adducts époxyde-amine réticulant à température élevée par formation de polyuréthannes, caractérisées en ce qu'elles contiennent en tant que liant un produit de réaction d'un polymère portant des groupes époxydes et présentant un poids équivalent d'époxyde compris entre 180 et 1 500, dont les groupes époxydes ont réagi en proportions de 3 à 70 moles %, de préférence de 5 à 40 moles %, avec un adduct de polyisocyanate qui ne contient pas de groupes NCO libres et contient par molécule au moins un, de préférence un à deux groupes carboxyles, et avec une amine et/ou alcanolamine (cyclo)aliphatique secondaire, le liant présentant un indice d'acide qui est au maximum de 5 mg de KOH/g et un indice d'amine de 24 à 150 mg de KOH/g.

6. Utilisation des peintures selon la revendication 5 pour le procédé d'électro-revêtement cathodique par immersion (ETL).